# EUROPEAN PATENT SPECIFICATION

(11) **EP 2 537 425 B1**
(45) Date of publication and mention of the grant of the patent: **03.09.2014**
(21) Application number: 12172785.3
(22) Date of filing: 20.06.2012
(51) Int. Cl.: A23N 17/00, A01K 5/00

(54) **Mixing Truck**
Fahrmischer
Camion mélangeur

(30) Priority: 20.06.2011 IT PD20110207
(43) Date of publication of application: 26.12.2012
(73) Proprietor: Faccia Technology s.r.l. unipersonale, 30121 Venezia (IT)
(72) Inventor: Faccia, Fausto, 30121 Venezia (IT)
(74) Representative: Locas, Davide

(56) References cited:
- EP-A2- 0 930 005
- WO-A1-00/59619
- WO-A1-01/97595
- US-A1- 2006 175 445

## Description

The present invention relates to a mixing truck for mixing and then dispensing feed mixes, comprising feed mix dispensing means located in the rear region of the truck.

In activities connected with livestock raising it is known to use mixing trucks for animal feed. These mixing trucks generally have means for loading feed mixes, a mixing container inside which the mixes are mixed, and one or more conveyor belts which receive the mixes output from the mixing container and dispense them to the livestock.

The conveyor belts are generally arranged transversely with respect to the longitudinal axis of the truck so as to dispense the mix sideways.

The position of the conveyor belts along the truck, however, is fundamentally connected with various constructional choices. In fact there are known trucks with front discharge outlets that is, trucks in which the belt is arranged in front of the vehicle's front wheels, for example, such as that described in EP 930 005, trucks with discharge outlets in an intermediate position between the vehicle's front and rear wheels, as in EP 0003813 and, finally, trucks with rear discharge outlets.

A specific configuration of the feed mix discharge outlet requires trucks to have a consistent arrangement of the remaining components, in particular of the engine compartment, of the driver's cab, and of the mixing container. More precisely, central discharge trucks can have the engine positioned in the front portion or in the rear portion as, for example, in patent application WO 00/59619, according to various constructional requirements, thus permitting a high degree of design freedom. However, central discharge trucks have the disadvantage that they are not suitable for dispensing the feed mix in the most remote regions of sheds, particular when the sheds have only one entrance.

With reference to front discharge trucks, which is a solution that permits greater ease of access to sheds, it is known to locate the engine compartment in the front portion of the vehicle on the opposite side to the cab. The belt dispensing means are thus located so as to project in front of the engine compartment in this case.

In rear discharge trucks, on the other hand, the engine compartment is arranged at the front to permit the arrangement of the dispensing means at the rear. This solution is advantageous in particular in comparison with preceding solutions since it permits easier access in sheds in which there is only one entrance, the truck entering in reverse as far as the back of the shed and then dispensing the feed whilst moving forwards inside the shed. In this case, however, the presence of the engine compartment in the vicinity of the driving cab makes the vehicle uncomfortable because of the heat and noise emitted. In addition, the feed collecting cutter, which is also arranged at the front, leads to an accumulation of dirt and debris in the region of the engine compartment, thus requiring more maintenance than when the engine compartment is at the rear.

However, although known solutions with rear engine compartments are also better from the comfort point of view, they require larger dimensions of the vehicle and consequently make it less easy to handle and manoeuvre, particularly on the road.

The technical problem underlying the present invention is therefore that of providing a mixing truck which overcomes the disadvantages discussed above with reference to the prior art.

This problem is solved by the mixing truck according to Claim 1.

The present invention has some considerable advantages. The main advantage is that the mixing truck according to the present invention ensures optimal driving comfort whilst having the feed mix dispensing means in a rear position.

In addition, the truck according to the present invention has generally quite small dimensions, in particular in terms of length, since it makes use of the spaces that are normally available in the vehicle. Ease of driving and manoeuvring of the truck are thus improved.

Further advantages, characteristics and the implementation of the present invention will become clear from the following detailed description of some embodiments which are given by way of non-limiting example. Reference will be made to the appended drawings, in which:
Figure 1 is a perspective view of a mixing truck according to the present invention;
Figure 2 is a schematic side view of the mixing truck according to the present invention, from which the engine compartment and other transmission components have been removed to render some internal components visible;
Figure 3 is a detailed view of the mixing truck of Figure 2 from behind;
Figure 4 is a side view of the truck of Figure 3, sectioned on the line IV-IV;
Figure 5 is a plan view of the rear portion of the truck of Figure 2;
Figure 6 is a perspective view of the rear portion of the truck of Figure 2; and
Figure 7 is a schematic side view which shows the rear portion of a mixing truck according to an alternative embodiment.

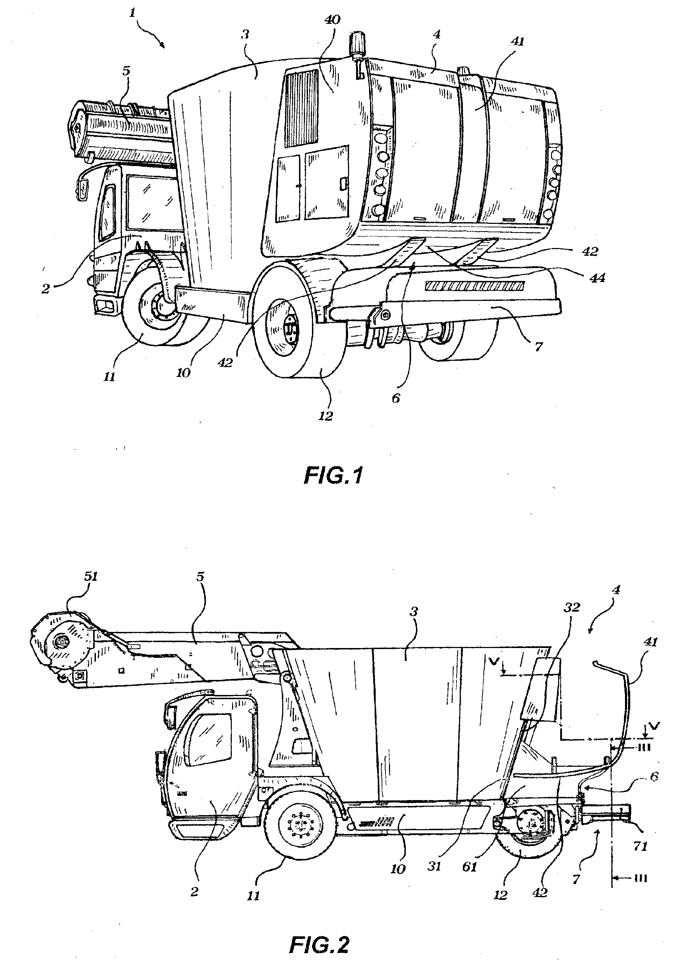

With reference initially to Figure 1, a mixing truck is generally indicated 1. In the context of the present invention, the term "mixing truck" will mean a self-propelled vehicle which is provided with independent propulsion means, not shown in the drawings, and is intended for the collection, mixing and dispensing of a feed mix.

For this purpose, the truck 1 has a supporting chassis 10 provided with at least two pairs of wheels 11 and 12, arranged in an anterior or front portion, and in a rear portion of the truck, respectively.

On the supporting chassis 10 of the mixing truck 1 there are a driving cab 2 and an engine compartment 4, inside which the propulsion means of the truck 1 are housed; these define the above-mentioned front and rear portions, respectively. More precisely, as can be seen in Figure 2, the front and rear portions are longitudinally opposed and the front portion corresponds to the direction of travel of the truck 1, defined by the driving cab 2.

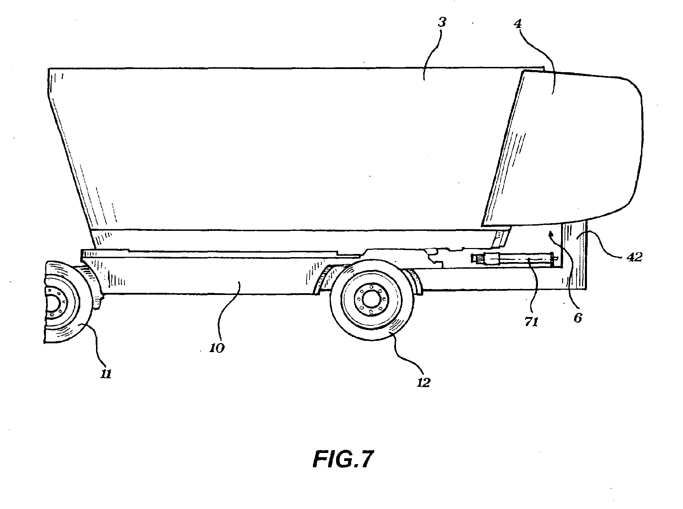

In an intermediate position between the driving cab 2 and the engine compartment 4, there is also a mixing container 3 inside which the feed mix is mixed by means of a screw, not shown in the drawings. The mixing container 3 is of known type and may also be of the type with several screws, in particular with two screws, as in the embodiment shown in Figure 7, which will be described in greater detail below. Moreover, the container 3 is also supported on the chassis 2 and occupies substantially the entire space defined by the space between axles of the front wheels 11 and the rear wheels 12.

Still with reference to Figures 1 and 2, the truck 1 according to the present invention comprises loading means 5 for the feed mix, formed by a cutter 51 which is mounted on a movable arm and collects the material from the ground, the material then being transported along the arm to the mixing container 3.

These features are in any case known to persons skilled in the art and, for this reason, will not be described in greater detail.

The mixing container 3 also has a discharge opening 31 positioned in a rear wall 32 of the container 3 in the vicinity of its base.

The discharge opening 31 also has a closure device, not shown in the drawing, which allows the opening 31 to be opened and closed alternatively. By way of example, the closure device may be formed by a sliding door. However, the mixing truck according to the present invention also permits the use of closures of different types.

The mixing truck according to the present invention further comprises a dispensing conduit 6 arranged at the outlet of the discharge opening 31.

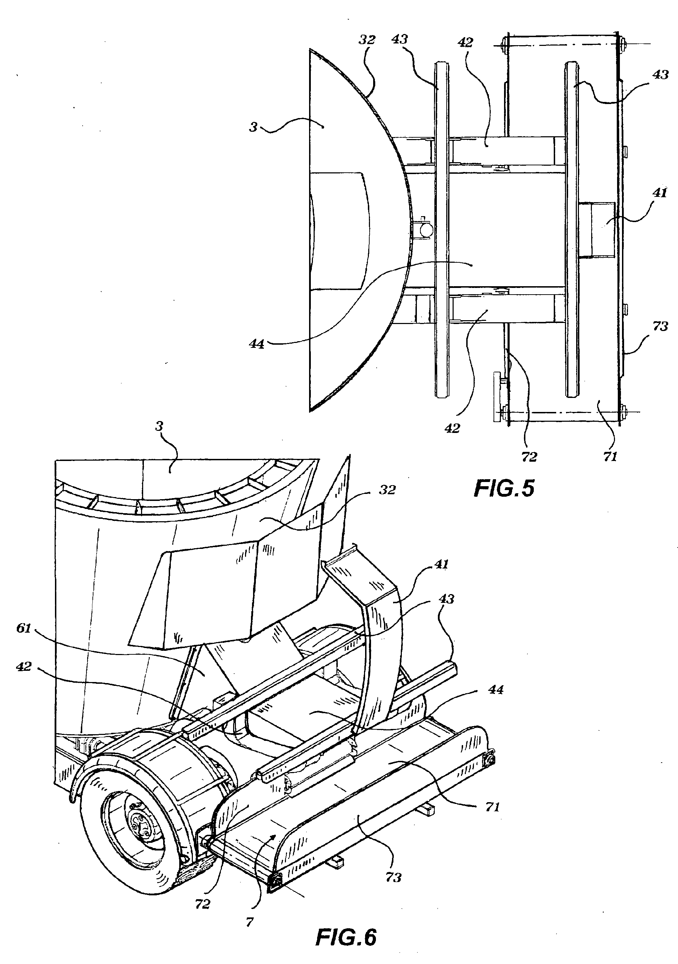

More precisely, and as can be seen best in Figure 6, the dispensing conduit 6 is defined by two lateral walls 61, by a top wall 44, and by a bottom surface 62 on which the feed mix output from the discharge opening 31 is advanced.

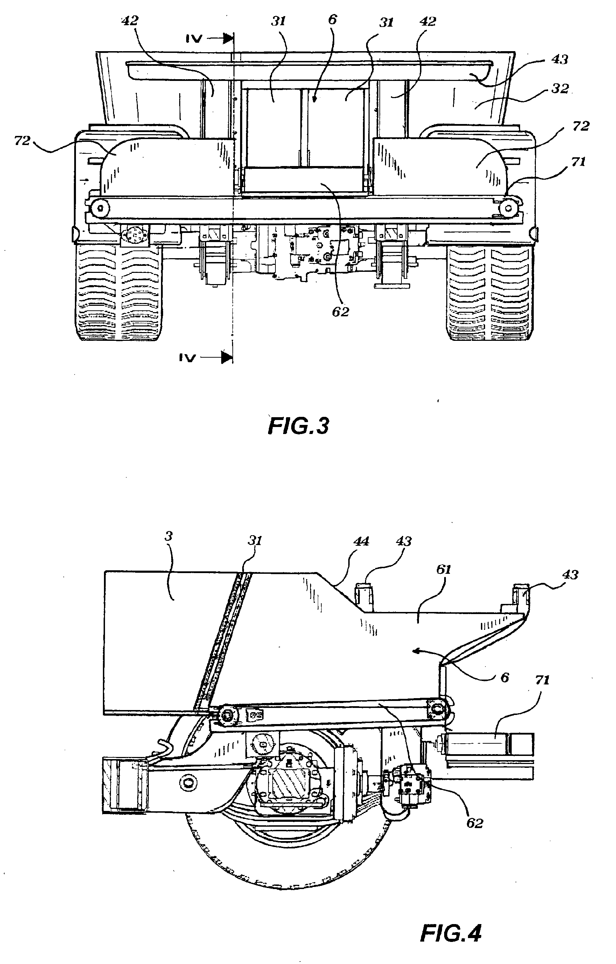

As can be seen from Figure 4, the bottom surface 62 may be defined by a conveyor belt so as to facilitate the movement of the mixture along the conduit 6 when the conduit 6 is very long.

Moreover, with reference to Figure 2 in particular, the top wall 44 coincides with a bottom surface of the engine compartment 4 and in fact forms a separation between the dispensing conduit 6 and the engine compartment 4.

The entire dispensing conduit 6 or, more generally, a predominant portion thereof, can thus advantageously extend underneath the engine compartment 4 and, since the dispensing conduit is formed as a completely separate compartment, the mixture output from the container 3 is prevented from entering the engine compartment 4.

The dispensing conduit 6 is also preferably arranged between the two rear wheels 12 thus permitting greater optimization of the available space. In greater detail, the conduit 6 is arranged above a wheel transmission axle, not shown in the drawing and, as already indicated, underneath the engine compartment 4.

To permit the above-described positioning of the dispensing conduit 6, the truck according to the present invention further comprises means for supporting the engine compartment 4, which are shown in detail in Figures 5 and 6.

These support means comprise two lateral supports 42 arranged laterally and outside the lateral walls 61 of the dispensing conduit, and two cross members 43, which are supported by the supports 42 and arranged above the dispensing conduit 6.

The engine compartment 4, in particular, the box-like body 40 which defines it, can thus be arranged resting on the cross-members 43 and can be kept raised relative to the discharge opening 31 and the dispensing conduit 6.

In addition, the support means comprise a vertical member 41 which extends at the rear from one of the two cross members 43 and, together with the side wall of the mixing container 3, defines a housing region of the engine compartment 4.

The truck according to the present invention further comprises dispensing means 7 for the feed mix output from the dispensing conduit 6.

The dispensing means comprise a conveyor belt 71 which is arranged transversely with respect to the dispensing conduit 6 and preferably perpendicularly with respect to the longitudinal axis of the truck 1.

As can be seen in particular from Figure 2, by virtue of the presence of the engine compartment support means and the consequent arrangement of the dispensing conduit, the dispensing means 7 can also be arranged at least partially underneath the engine compartment with a consequent reduction in overall dimensions.

In order to improve the discharge of the mixture on the dispensing belt, lateral containing walls 72 and 73 are also arranged beside a work surface of the dispensing belt 7. In particular, the lateral wall 72 is divided into two portions arranged beside the outlet of the dispensing conduit 6. It can thus be seen that the rotation of the belt 7 in one or other direction enables the mix output from the conduit 6 to be dispensed on the two sides of the truck alternatively.

With reference to Figure 7, this illustrates an alternative embodiment of the present invention in which the mixing container 3 is of the type with two screws. In this case, by virtue of the greater space available, the dispensing belt 71 can be located entirely underneath the engine compartment 4 and the dispensing conduit 6 can consequently be made shorter. In particular, in this case, the use of the conveyor belt 62 will not be required and, optionally, the bottom surface of the dispensing conduit 6 may correspond to the surface of the belt 71 itself.

The mixing truck according to the present invention thus clearly solves the problems identified with reference to the prior art by virtue of the engine compartment support means which allow it to be located above the conduit for dispensing the mix output from the mixing container.

In addition, the means for dispensing the feed mix to the livestock are at least partially underneath the engine compartment, thus maximizing the utilization of the available space.

## Claims

1. A mixing truck (1) for preparing and dispensing feed mixes, comprising a supporting chassis (10), a mixing container (3) mounted on the supporting chassis (10), loading means (5) for loading feed mixes into the container (3), the container (3) comprising a discharge opening (31) for the feed mix, an engine compartment (4) for housing the means of propulsion of the truck (1), the engine compartment (4) forming a rear part of the truck (1), and means (7) for dispensing the feed mix to livestock, **characterized in that** the mixing truck (1) additionally comprises a feed mix dispensing conduit (6) which receives the feed mix exiting the discharge opening (31) and sends it to the dispensing means (7), the dispensing conduit (6) extending parallel to a longitudinal axis of the truck (1) and being positioned underneath the engine compartment (4), and the dispensing means (7) being transverse with respect to the dispensing conduit (6).

2. A mixing truck (1) according to Claim 1, wherein the supporting chassis (10) comprises means (41, 42, 43) for supporting the engine compartment (4), these means being capable of keeping the engine compartment (4) elevated above the dispensing conduit (6).

3. A mixing truck (1) according to Claim 1 or 2, wherein the dispensing conduit (6) is defined by two lateral walls (61), a top wall (44), and a bottom surface (62), which separate the conduit (6) from the engine compartment (4).

4. A mixing truck (1) according to Claim 2 or 3, wherein the supporting means comprise a pair of lateral supports (42) positioned laterally and outside the lateral walls (61) of the dispensing conduit (6) and a pair of cross members (43) which are supported by the supports (42) and on which a box-like body (40) of the engine compartment (4) rests.

5. A mixing truck (1) according to Claim 4, wherein the supporting means additionally comprise a vertical member (41), the box-like body (40) being interposed between the vertical member (41) and a lateral wall of the mixing container (3).

6. A mixing truck (1) according to any one of the preceding claims, wherein the dispensing means (7) are positioned at least partially underneath the engine compartment (4).

7. A mixing truck (1) according to any one of the preceding claims, wherein the dispensing conduit (6) comprises means for advancing (62) the feed mix.

8. A mixing truck (1) according to any one of the preceding claims, wherein the dispensing conduit (6) is interposed between rear wheels (12) of the truck, above a transmission axle of the wheels (12).

## Patentansprüche

1. Lkw-Mischer (1) zum Zubereiten und Verteilen von Futtermischungen, umfassend ein abstützendes Fahrgestell (10), einen Mischbehälter (3), der auf dem abstützenden Fahrgestell (10) befestigt ist, eine Ladeeinrichtung (5) zum Laden von Futtermischungen in den Behälter (3), wobei der Behälter (3) eine Abgabeöffnung (31) für die Futtermischung aufweist, einen Motorraum (4) zum Aufnehmen der Antriebseinrichtung des Lkws (1), wobei der Motorraum (4) einen hinteren Teil des Lkws (1) bildet, und eine Einrichtung (7) zum Verteilen der Futtermischung an das Vieh, **dadurch gekennzeichnet, dass** der Lkw-Mischer (1) zusätzlich einen Futtermischungs-Verteilkanal (6) aufweist, der die Futtermischung aufnimmt, die von der Abgabeöffnung (31) abgegeben wird, und diese an die Verteileinrichtung (7) weiterleitet, wobei sich der Verteilkanal (6) parallel zu einer Längsachse des Lkws (1) erstreckt und unterhalb des Motorraums (4) positioniert ist, und wobei die Verteileinrichtung (7) bezüglich des Verteilkanals (6) quer verläuft.

2. Lkw-Mischer (1) gemäß Anspruch 1, wobei das abstützende Fahrgestell (10) Einrichtungen (41, 42, 43) zum Abstützen des Motorraums (4) aufweist, wobei diese Einrichtungen den Motorraum (4) erhöhend oberhalb des Verteilkanals (6) halten können.

3. Lkw-Mischer (1) gemäß Anspruch 1 oder 2, wobei der Verteilkanal (6) durch zwei Seitenwände (61), eine obere Wand (44) und eine Bodenfläche (62) gebildet wird, die den Kanal (6) vom Motorraum (4) trennen.

4. Lkw-Mischer (1) gemäß Anspruch 2 oder 3, wobei die abstützenden Einrichtungen ein Paar seitlicher Abstützungen (42), die seitlich und außerhalb der Seitenwände (61) des Verteilkanals (6) positioniert sind, und ein Paar Querträger (43) aufweisen, die durch die Abstützungen (42) abgestützt sind und auf denen ein behälterförmiger Körper (40) des Motorraums (4) liegt.

5. Lkw-Mischer (1) gemäß Anspruch 4, wobei die Abstützeinrichtungen zusätzlich ein vertikales Element (41) aufweisen, wobei der behälterförmige Körper (40) zwischen dem vertikalen Element (41) und einer Seitenwand des Mischbehälters (3) angeordnet ist.

6. Lkw-Mischer (1) gemäß einem der vorhergehenden Ansprüche, wobei die Verteileinrichtungen (7) zumindest teilweise unterhalb des Motorraums (4) positioniert sind.

7. Lkw-Mischer (1) gemäß einem der vorhergehenden Ansprüche, wobei der Verteilkanal (6) eine Fördereinrichtung (62) für die Futtermischung aufweist.

8. Lkw-Mischer (1) gemäß einem der vorhergehenden Ansprüche, wobei der Verteilkanal (6) zwischen den Hinterrädern (12) des Lkws, oberhalb einer Übertragungsachse der Räder (12), angeordnet ist.

## Revendications

1. Camion mélangeur (1) pour préparer et distribuer des mélanges d'aliments, comprenant un châssis de support (10), un conteneur de mélange (3) monté sur le châssis de support (10), des moyens de chargement (5) pour charger les mélanges d'aliments dans le conteneur (3), le conteneur (3) comprenant une ouverture de décharge (31) pour le mélange d'aliments, un compartiment de moteur (4) pour loger les moyens de propulsion du camion (1), le compartiment de moteur (4) formant une partie arrière du camion (1) et des moyens (7) pour distribuer le mélange d'aliments au bétail, **caractérisé en ce que** le camion mélangeur (1) comprend de plus un conduit de distribution de mélange d'aliments (6) qui reçoit le mélange d'aliments sortant de l'ouverture de décharge (31) et l'envoie aux moyens de distribution (7), le conduit de distribution (6) s'étendant parallèlement à un axe longitudinal du camion (1) et étant positionné au-dessous du compartiment de moteur (4) et les moyens de distribution (7) étant transversaux par rapport aux conduit de distribution (6).

2. Camion mélangeur (1) selon la revendication 1, dans lequel le châssis de support (10) comprend des moyens (41, 42, 43) pour supporter le compartiment de moteur (4), ces moyens étant capables de maintenir le compartiment de moteur (4) levé au-dessus du conduit de distribution (6).

3. Camion mélangeur (1) selon la revendication 1 ou 2, dans lequel le conduit de distribution (6) est défini par deux parois latérales (61), une paroi supérieure (44) et une surface inférieure (62) qui séparent le conduit (6) du compartiment de moteur (4).

4. Camion mélangeur (1) selon la revendication 2 ou 3, dans lequel les moyens de support comprennent une paire de supports latéraux (42) positionnés latéralement et à l'extérieur des parois latérales (61) du conduit de distribution (6) et une paire de traverses (43) qui sont supportées par des supports (42) et sur lesquels un corps en forme de boîte (40) du compartiment de moteur (4) repose.

5. Camion mélangeur (1) selon la revendication 4, dans lequel les moyens de support comprennent de plus un élément vertical (41), le corps en forme de boîte (40) étant intercalé entre l'élément vertical (41) et une paroi latérale du conteneur de mélange (3).

6. Camion mélangeur (1) selon l'une quelconque des revendications précédentes, dans lequel les moyens de distribution (7) sont positionnés au moins partiellement au-dessous du compartiment de moteur (4).

7. Camion mélangeur (1) selon l'une quelconque des revendications précédentes, dans lequel le conduit de distribution (6) comprend des moyens pour faire avancer (62) le mélange d'aliments.

8. Camion mélangeur (1) selon l'une quelconque des revendications précédentes, dans lequel le conduit de distribution (6) est intercalé entre des roues arrière (12) du camion, au-dessus d'un essieu de transmission des roues (12).
